Europäisches Patentamt

European Patent Office

Office européen des brevets

(19)

(11) Veröffentlichungsnummer: **0 482 341 B1**

(12) **EUROPÄISCHE PATENTSCHRIFT**

(45) Veröffentlichungstag der Patentschrift: **13.12.95**

(51) Int. Cl.⁶: **G01D 5/249**, G01B 7/30

(21) Anmeldenummer: **91115570.3**

(22) Anmeldetag: **13.09.91**

(54) **Dreh- oder Linearpositionsgeber**

(30) Priorität: **26.09.90 DE 4030450**

(43) Veröffentlichungstag der Anmeldung:
**29.04.92 Patentblatt 92/18**

(45) Bekanntmachung des Hinweises auf die
Patenterteilung:
**13.12.95 Patentblatt 95/50**

(84) Benannte Vertragsstaaten:
**AT BE CH DE DK ES FR GB GR IT LI LU NL SE**

(56) Entgegenhaltungen:
**EP-A- 0 230 287**
**GB-A- 2 008 256**
**US-A- 4 757 257**

**IEEE TRANSLATION JOURNAL ON MAGNE-
TICS IN JAPAN, Bd. 5, Nr. 8, 1. August 1990,
New York, US, Seiten 711-719; S. Yamashita
et al.: "Development of the absolute type
magnetic encoder suitable for thinner structure"**

**PATENT ABSTRACTS OF JAPAN vol. 7, no.
278 (P-242)(1423) 10. Dezember 1983 & JP-
A-58155312**

(73) Patentinhaber: **SIEMENS AKTIENGESELL-
SCHAFT**
**Wittelsbacherplatz 2**
**D-80333 München (DE)**

(72) Erfinder: **Schewe, Herbert, Dr.**
**Haydnstrasse 58**
**W-8522 Herzogenaurach (DE)**
Erfinder: **Burger, Wilhelm**
**Krähenweg 47**
**W-8510 Fürth (DE)**
Erfinder: **Cuylen, Michael**
**Kantstrasse 69**
**W-8502 Zirndorf (DE)**

S. Rösler: "Winkelme einrichtung mit hoher Auflösung", Ingenieurarbeit TU Chemnitz 1/90, Seiten 1-3, 36 und 37

F. Leuschner: "Ein hochauflösendes rotatorisches Me system auf Basis eines magnetoresistiven Mehrspur-Lesekopfes", Ingenieurarbeit TU Chemnitz 1/91, Seiten 1,2 und 18

H. Brockmann: "Ein Beitrag zur Entwicklung eines hochauflösenden, rotatorischen Me -Systems auf magnetischer Basis mit einem magnetoresistiven Lesekopf mit drei Spuren", Ingenieurarbeit TU Chemnitz 3/92, Seiten 1,2 und 49

S. Rösler: "Winkelme einrichtung mit hoher Auflösung", Ingenieurarbeit TU Chemnitz 2/89, Seiten 1,3,4 und 44

## Beschreibung

Die Erfindung bezieht sich auf einen Dreh- oder Linearpositionsgeber.

Mit Drehpositionsgebern, die auch als Drehgeber, Drehmeßwertaufnehmer oder Drehwinkel(de)-codierer bezeichnet werden, lassen sich allgemein bei einer drehenden Bewegung einer Einrichtung, z.B. eines Maschinenteils, vom Drehwinkel abhängige elektrische Meßsignale gewinnen. Auch für Einrichtungen mit linear beweglichen Teilen sind Positionsgeber mit entsprechender Signalerzeugung entwickelt worden. Ein aus der Siemens-Veröffentlichung "Inkrementale Drehgeber" bekannter Drehpositionsgeber enthält eine an einem drehbeweglichen Maschinenteil zu befestigende Scheibe aus Glas als Codeträger, auf der ein Codemuster von in sich konzentrisch umschließenden Spuren befindlichen Radialstrichen (oder Segmenten) ausgebildet ist. Dieses Muster wird optoelektronisch abgetastet, indem das Licht mindestens einer Lichtquelle durch die transparenten Segmente der Codescheibe auf eine Vielzahl von Photodioden als Detektoren fällt, die jeweils einer bestimmten Spur der Codescheibe zugeordnet sind. Das Strichmuster ist dabei so gewählt, daß mit Hilfe der Detektoren und einer ihnen zugeordneten Elektronik eine eindeutige Aussage über den Absolutwert des Drehwinkels bezüglich einer vorgegebenen Bezugslage ermöglicht ist. Es hat sich nun gezeigt, daß bei dieser optischen Abtastung des Strichmusters Verschmutzungen der Codescheibe z.B. aufgrund von Schmiermitteln oder Flüssigkeiten eine eindeutige Auswertung erschweren können. Außerdem besteht vielfach die Gefahr, daß aufgrund unvermeidlicher Vibrationen der rotierenden Teile die Lichtquellen vorzeitig ausfallen.

Aus dem Beitrag bzw. Paper DQ-05 der "Intermag '90"-Konferenz, Brighton 1990 (GB) mit dem Titel "Magnetoresistive Sensors for Rotary Position Encoders" ist es ferner bekannt, auf dem Außenumfang eines "Encoder"-Rades eines Drehpositionsgebers eine Schicht aus einem magnetisierbaren Material aufzubringen. In diese Schicht werden mittels eines Magnetkopfes längs einer Spur Magnetisierungswechsel (bzw. -übergänge) induktiv eingeschrieben. Zum Auslesen des so entstandenen Magnetisierungsmusters dienen magnetoresistive Sensoren. Da diese Sensoren nur die Magnetisierungsübergänge mit einem Feldverlauf des damit verbundenen Streufeldes in einer longitudinalen Richtung detektieren, können mit dem bekannten Drehpositionsgeber folglich nur Informationen bei einer Drehbewegung seines Encoder-Rades, nicht aber Informationen über den Absolutwert des Drehwinkels bei einem Stillstand des Encoder-Rades gewonnen werden.

Aus der US-A-Schrift Nr, 4,757,257 geht ein weiterer Positionsgeber hervor, der einen mit einem beweglichen Teil einer Einrichtung starr verbundenen Codeträger aufweist, welcher mit einer magnetisierbaren Speicherschicht versehen ist. Gemäß einer speziellen Ausführungsform wird in diese Speicherschicht ein Codemuster in mindestens zwei nebeneinanderliegende Teilspuren nach dem Prinzip einer vertikalen Magnetisierung in Form eines Magnetisierungsmusters eingeschrieben. Das Codemuster ist dabei aus jeweils zwei in den parallelen Teilspuren liegenden, von der jeweiligen Position des beweglichen Teils abhängigen Informationsabschnitten mit entgegengesetzter Magnetisierung und unterschiedlicher longitudinaler Ausdehnung gebildet. Den beiden Teilspuren einer solchen Doppelspur ist zum Auslesen jeweils ein eigener magnetoresistiver Sensor zugeordnet. Der Aufwand zum Beschreiben der Speicherschicht mit einem entsprechenden Codemuster und zu dessen Auslesen ist verhältnismäßig groß.

Statt der aus der US-A-Schrift zu entnehmenden vertikalen, d.h. senkrecht zur Spur verlaufenden Magnetisierung der Informationsabschnitte kann man gemäß der Veröffentlichung "IEEE Translation Journal on Magnetics in Japan", Vol. 5, No. 8, Aug. 1990, Seiten 711 bis 719, bei magnetischen Encodern vom Absoluttyp auch eine Magnetisierung quer zur Spurrichtung vorsehen.

Aufgabe der vorliegenden Erfindung ist es deshalb, einen Drehpositionsgeber bzw. einen entsprechenden Linearpositionsgeber anzugeben, der gegenüber der aus der US-A-Schrift zu entnehmenden Ausführungsform vereinfacht ist. Dabei soll eine eindeutige Aussage über den absoluten Drehwinkel auch bei einem Stillstand des drehbeweglichen Teils ermöglicht sein. Der Dreh- oder Linearpositionsgeber soll einen inkrementalen und/oder absoluten Positionsgeber darstellen.

Diese Aufgabe wird erfindungsgemäß mit den Anspruchs 1 aufgeführten Maßnahmen gelöst.

Aufgrund der erfindungsgemäßen Unterteilung jeder Spur in zwei Teilspuren mit entgegengesetzter Magnetisierungsrichtung ist bei dem erfindungsgemäßen inkrementalen und absoluten Positionsgeber das magnetische Streufeld immer transversal, d.h. senkrecht oder quer, bezüglich der Spur gerichtet. Dabei setzt sich jeder Informationsabschnitt aus zwei in den nebeneinanderliegenden Teilspuren vorhandenen Teilabschnitten gleicher longitudinaler Länge mit entgegengesetzter Magnetisierung zusammen. Die damit verbundenen Vorteile sind insbesondere darin zu sehen, daß an jedem Ort des Codeträgers beliebig lange Muster bzw. Informationsabschnitte einzuschreiben sind und so eine eindeutige Aussage bezüglich der jeweiligen absoluten Dreh- oder Linearposition ermöglicht wird. Auf dem Codeträger sind also Magnetisierungs- und damit Magnetfeldmuster quasi als ein Code einzuspeichern, die z.B. dem der optoelektronisch abzutastenden Codescheibe zumindest weitgehend entsprechen können. Das magnetische Auslesen der gespeicherten Informationen erfolgt dann induktiv mit an sich bekannten magnetoresistiven Sensoren und ist vorteilhaft wenig störungsanfällig. Dabei werden im Gegensatz zu der eingangs genannten US-A-Schrift die beiden Teilspuren immer zugleich mit dem mindestens einen Sensor ausgelesen.

Vorteilhafte Ausgestaltungen des erfindungsgemäßen Dreh- oder Linearpositionsgebers gehen aus den Unteransprüchen hervor.

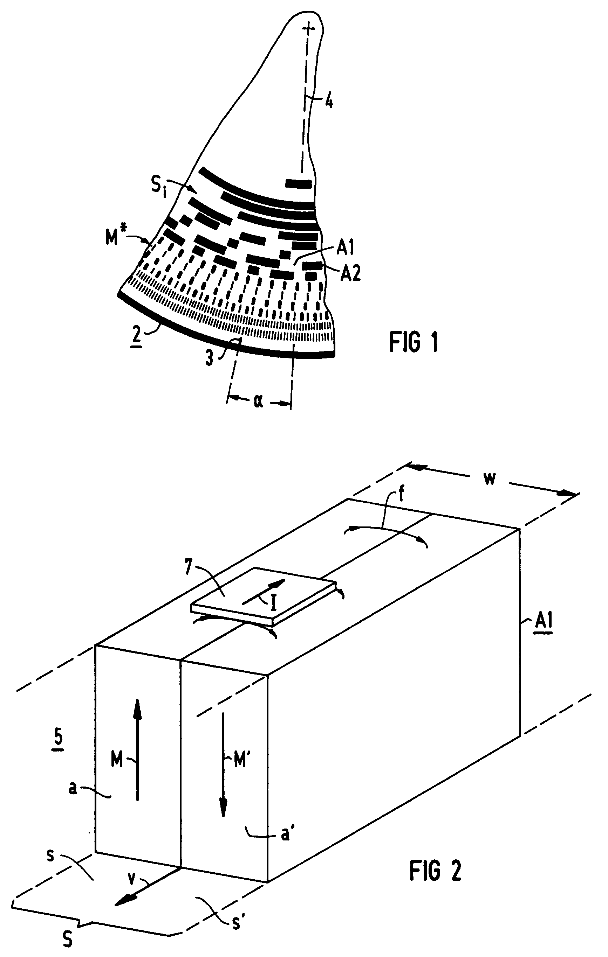

Zur weiteren Erläuterung der Erfindung wird nachfolgend auf die schematischen Darstellungen der Zeichnung Bezug genommen. Figur 1 zeigt einen Ausschnitt einer erfindungsgemäß gestalteten Codescheibe eines Drehpositionsgebers.

Für die Figuren 2 bis 6 ist ein erstes Magnetisierungsprinzip angenommen. Dabei ist aus den Figuren 2 und 3 ein magnetoresistiver Sensor als Auslesevorrichtung über einen Informationsabschnitt dieser Scheibe in Schrägansicht bzw. als Schnitt ersichtlich. In Figur 4 ist eine aus zwei magnetoresistiven Sensoren bestehende Auslesevorrichtung angedeutet. Figur 5 zeigt zwei hintereinanderliegende Informationsabschnitte einer Spur. Aus Figur 6 geht eine Anordnung mit zwei jeweils einer Spur zugeordneten Auslesevorrichtungen hervor. Für die Figuren 7 bis 10 ist ein weiteres Magnetisierungsprinzip zugrundegelegt. Dabei ist in den Figuren 7 und 8 eine Schrägansicht bzw. ein Schnitt eines Informationsabschnittes veranschaulicht. Aus Figur 9 sind zwei hintereinanderliegende Informationsabschnitte ersichtlich. In den Figuren sind sich entsprechende Teile mit denselben Bezugszeichen versehen. Nicht dargestellte Teile eines Drehpositionsgebers sind allgemein bekannt.

Für das Figur 1 zugrundegelegte Ausführungsbeispiel ist ein Drehpositionsgeber gewählt. Seine in dieser Figur als Aufsicht gezeigte, allgemein mit 2 bezeichnete Codescheibe, von der in der Figur nur ein sektorförmiger Abschnitt ersichtlich ist, läßt sich an dem drehbeweglichen Teil einer maschinellen Einrichtung, beispielsweise an der Geberwelle eines Stellmotors eines Roboters, befestigen. Die Codescheibe 2 besteht im wesentlichen aus einer kreisförmigen Platte aus einem nicht-magnetischen Material. Diese als Codeträger dienende Platte ist erfindungsgemäß mit einem magnetisierbaren Medium beschichtet, wie es von der Datenspeichertechnik nach dem longitudinalen oder vertikalen Magnetisierungsprinzip allgemein bekannt ist (vgl. z.B. "SMPTE Journal", Dez. 1984, Seiten 1127 bis 1133). Die Codierung des magnetischen Mediums kann dabei in Analogie zu den bekannten optischen Verfahren mittels mindestens eines Magnetkopfes erfolgen. Hierzu werden in sich konzentrisch umschließenden Spuren $S_i$ streifenförmige Informationsabschnitte A1 bzw. A2 eingeschrieben, die sich durch unterschiedliche Richtungen der Magnetfelder transversal zur Spurrichtung auszeichnen. Gemäß der Darstellung der Figur sei beispielsweise angenommen, daß das von den hellen streifenförmigen Informationsabschnitten A1 erzeugte Magnetfeld radial nach dem Mittelpunkt der Platte hin verlaufen soll, während es in den dunklen streifenförmigen Informationsabschnitten A2 entgegengerichtet ist. Es ergibt sich so ein Magnetisierungs- bzw. Magnetfeldmuster M*. Die durch ein solches Muster M* festgelegte Codierung der Codescheibe 2 soll dabei so vorgenommen sein, daß die mittels bekannter magnetfeldsensitiver Auslesevorrichtungen auszulesenden Spuren $S_i$ eine eindeutige Bestimmung des Absolutwertes des Drehwinkels $\alpha$ einer Markierung 3 auf der Scheibe 2 gegenüber einer vorgegebenen Bezugslinie 4 auch bei Stillstand der Scheibe ermöglicht.

Figur 2 zeigt einen Informationsabschnitt, beispielsweise den Informationsabschnitt A1, einer Spur S des in Figur 1 angedeuteten Magnetisierungsmusters M* in Schrägansicht. Bei dem Informationsabschnitt A1 kann es sich aber auch um einen Informationsabschnitt in einer linear verlaufenden Spur handeln, die in eine Speicherschicht auf einem langgestreckten (linearen) Codeträger eines Linearpositionsgebers eingeschrieben ist. Wie aus Figur 2 hervorgeht, soll erfindungsgemäß die Spur S mit einer Weite w in zwei nebeneinanderliegende Teilspuren s und s' und mit gleicher Weite w/2 unterteilt sein. Der Informationsabschnitt A1 setzt sich deshalb aus zwei nebeneinanderliegenden Teilabschnitten a mit a' zusammen. Gemäß der Erfindung sollen diese beiden Teilabschnitte a und a' so magnetisiert sein, daß in ihnen die Magnetisierung M bzw. M' entgegengesetzt gerichtet verläuft. Bei dem der Figur zugrundegelegten Ausführungsbeispiel sei der Informationsabschnitt A1 in eine Speicherschicht 5 aus einem vertikal orientierten Material wie z.B. aus einer CoCr-Legierung eingeschrieben. Die Schicht 5 kann z.B. 0,3 bis 1 $\mu$m dick sein und auf einer nicht-dargestellten weichmagnetischen Unterlage, z.B. aus einer speziellen NiFe-Legierung ("Permalloy") mit einer Dicke von etwa 0,5 $\mu$m, aufliegen. Die magnetischen Schichten lassen sich dabei in bekannter Weise durch Sputtern, Aufdampfen oder galvanisch herstellen.

Wegen der entgegengesetzten Magnetisierungsrichtungen M und M' in den Teilspuren s und s' ruft der Informationsabschnitt A1 ein Magnetfeld (magnetisches Streufeld) mit einem Fluß hervor, der radial, d.h. quer zur Längsrichtung der Spur S gerichtet ist. Von diesem Magnetfeld sind in Figur 2 einige Feldlinien f veranschaulicht. Das Feld wird mittels einer bekannten magnetfeldsensitiven Auslesevorrichtung wie z.B. einem geeigneten Magnetkopf ausgelesen. Besonders geeignet hierfür ist ein magnetoresistiver Sensor 7, der gemäß dem Ausführungsbeispiel der Figur mit seiner Flachseite parallel zur Oberfläche 8 des Informationsabschnittes A1 bzw. der Codescheibe längs der Spur S relativ geführt wird. Hierzu dreht sich die Codescheibe mit einer relativen Geschwindigkeit v der Spur S bzgl. des Sensors 7. Geeignete magnetoresistive Sensoren als Auslesevorrichtungen sind allgemein bekannt (vgl. z.B. "IEEE Trans. Magn.", Vol. MAG-17, No. 6, Nov. 1981, Seiten 2884 bis 2889 oder Vol. MAG-22, No. 5, Sept. 1986, Seiten 671 bis 676, oder "NTG-Fachberichte", Nr. 76, 1980, Seiten 61 bis 75 und Nr. 79, 1982, Seiten 254 bis 259). In dem in das Magnetfeld mit den Feldlinien f eingebrachten magnetoresistiven Sensor 7 wird ein durch eine gepfeilte Linie dargestellter Strom I erzeugt, der eine eindeutige Aussage über die Magnetisierungsverhältnisse in dem Informationsabschnitt A1 ermöglicht.

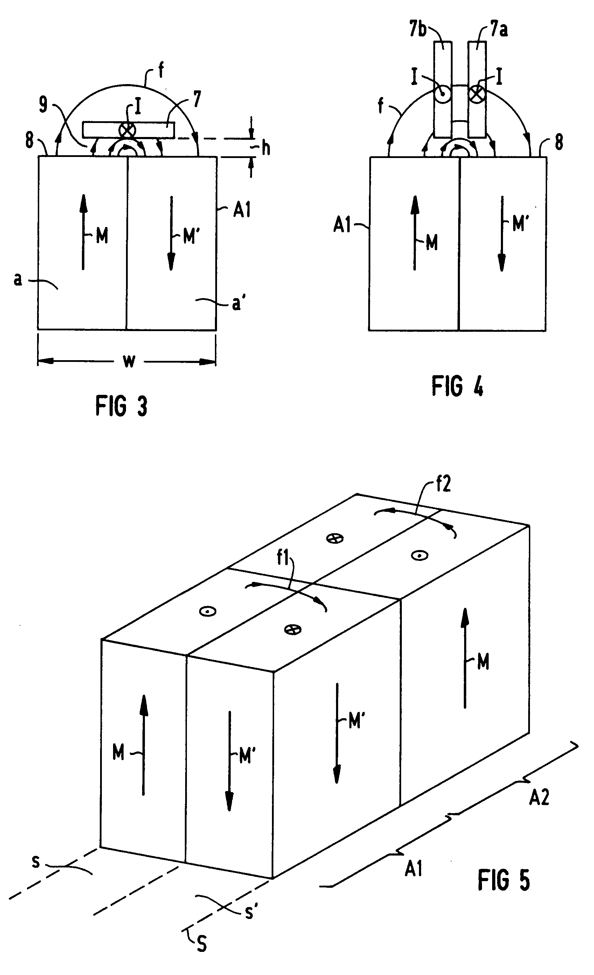

Figur 3 zeigt einen Schnitt durch den in Figur 2 dargestellten Informationsabschnitt A1 sowie durch den in einer Höhe h darüber hinweggeführten magnetoresistiven Sensor 7.

Die Größe des magnetischen Streufeldes, das aus der Oberfläche 8 der Speicherschicht der Codescheibe austritt, fällt mit zunehmendem Abstand h von der Oberfläche exponentiell ab. Daher sollte der Luftspalt 9 zwischen der Oberfläche 8 und dem magnetoresistiven Sensor 7 möglichst klein gewählt werden. Vorzugsweise kann gelten: h < w/2. Die Höhe h kann z.B. in einer Größenordnung von 1 mm liegen.

Gemäß den Figuren 2 und 3 wurde davon ausgegangen, daß einer Spur S in einer Codescheibe nur ein einziger magnetoresistiver Sensor 7 zugeordnet wird. Dabei ist dessen Flachseite zumindest im wesentlichen senkrecht zur Magnetisierung (M, M') in der Speicherschicht 5 und damit gemäß dem ausgewählten vertikalen Magnetisierungsprinzip parallel zur Oberfläche 8 der Codescheibe ausgerichtet. Selbstverständlich können auch ein oder zwei senkrecht angeordnete magnetoresistive Sensoren vorgesehen werden. Die in Figur 4 als Schnitt gezeigte Anordnung von zwei senkrecht zur Oberfläche 8 und damit parallel zur Magnetisierungsrichtung (M, M') ausgerichteten magnetoresistiven Sensoren 7a und 7b ist besonders vorteilhaft, wenn eine gute Gleichtaktunterdrückung für externe Magnetfelder gewährleistet sein soll. Externe Felder können aber auch durch bekannte Abschirmmaßnahmen ferngehalten werden.

Die Codierung einer Speicherschicht einer Codescheibe längs einer Spur ist aus der Schrägansicht der Figur 5 ersichtlich. Dabei sind in einer Spur S zwei hintereinanderliegende Informationsabschnitte A1 und A2 ersichtlich. Die Codierung erfolgt durch Änderung der Richtung der Magnetisierung in den einzelnen Abschnitten. Dies hat zur Folge, daß sich auch die Richtung des magnetischen Flusses bzw. des von den Abschnitten erzeugten Magnetfeldes entsprechend ändert. Die von den beiden Informationsabschnitten A1 und A2 hervorgerufenen Magnetfelder sind jeweils durch eine Feldlinie f1 bzw. f2 veranschaulicht.

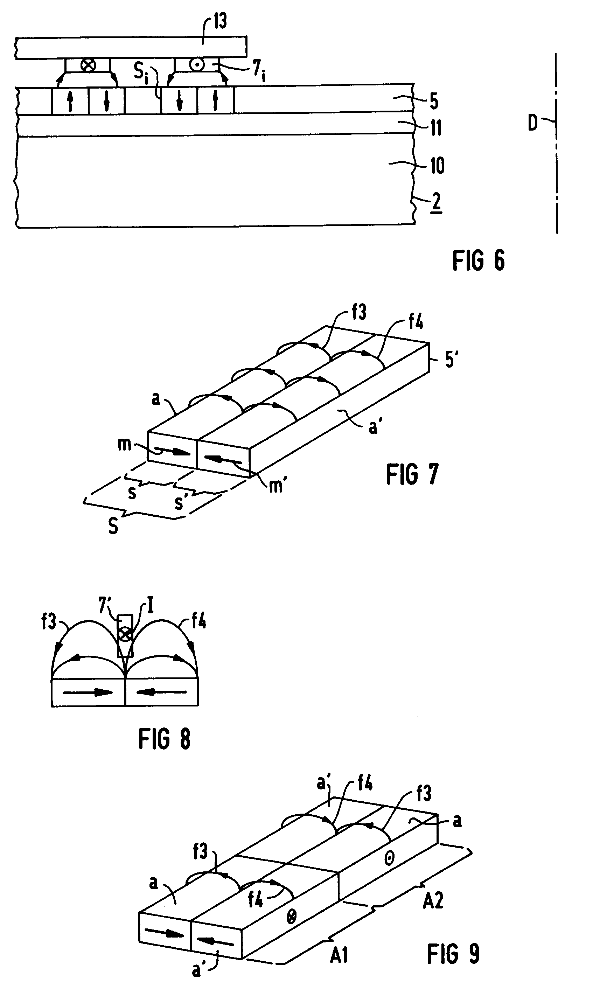

In Figur 6 ist ein Teil einer Codescheibe 2 als Schnitt dargestellt. Die um eine Achse D drehbare Scheibe weist eine nichtmagnetische Trägerplatte 10 als Substrat auf, auf der eine NiFe-Schicht 11 abgeschieden ist. Diese Schicht bildet eine weichmagnetische Unterlage unter der vertikal zu magnetisierenden Speicherschicht 5 aus einer CoCr-Legierung. In dieser Speicherschicht ist ein Magnetisierungsmuster aus mehreren konzentrischen Spuren $S_i$ in bekannter Weise durch induktive Magnetköpfe bei kleiner Flughöhe eingeschrieben. Den einzelnen Spuren ist jeweils ein magnetoresistiver Sensor $7_i$ zugeordnet. Diese Sensoren können vorteilhaft in bekannter Mikrofabrikationstechnik auf einem Waver 13 hergestellt werden. Bei einer Verwendung von horizontal angeordneten magnetoresistiven Sensoren $S_i$ lassen sich diese Sensoren auf dem Waver 13 als Sensor-Arrays, auch Sensor-Felder oder -Reihenanordnungen genannt, realisieren.

Gemäß den Ausführungsbeispielen nach den Figuren 2 bis 6 wurde eine Magnetisierung der Speicherschicht 5 nach dem vertikalen Magnetisierungsprinzip angenommen. Die Verwendung einer Codescheibe mit einer in der Ebene magnetisierten Speicherschicht ist ebenfalls möglich. Diese Magnetisierungsart ist für die Figuren 7 bis 10 angenommen. Dabei ist eine der Figuren 2 bis 5 entsprechende Darstellung gewählt. Wie z.B. aus Figur 7 hervorgeht, wird zur Erzeugung eines radial gerichteten Streufeldes in einer entsprechenden Speicherschicht 5' die Magnetisierung der Teilspuren s und s' transversal zur Längsrichtung der Spur eingeschrieben. Hierzu sind die Magnetisierungen m und m' in den Teilabschnitten a und a' der Teilspuren s und s' wiederum erfindungsgemäß entgegengesetzt gerichtet. Die Feldlinien des damit verbundenen Streufeldes sind in der Figur mit gepfeilten Linien f3 und f4 angedeutet.

Gemäß Figur 8 wird das Streufeld mit einem einzigen magnetoresistiven Sensor 7' ausgelesen, der wegen des gewählten horizontalen Magnetisierungsprinzips senkrecht bezüglich der Oberfläche 8' der Speicherschicht 5' und damit senkrecht zur Magnetisierung m, m' angeordnet ist.

Figur 9 zeigt zwei gemäß dem gewählten Magnetisierungsprinzip magnetisierte Informationsabschnitte A1 und A2.

Selbstverständlich braucht eine Codescheibe eines erfindungsgemäßen Drehpositionsgebers nicht ausschließlich mit einem Magnetisierungsmuster versehen zu sein, das ausschließlich von jeweils zwei nebeneinanderliegenden Teilspuren entgegengesetzter Magnetisierungsrichtung gebildet wird. Gegebenenfalls ist es auch möglich, dieses Magnetisierungsmuster mit bekannten Magnetisierungsmustern zu kombinieren. So ist es z.B. möglich, in die Codescheibe insbesondere im Randbereich ein sehr feines Muster analog dem genannten Konferenz-Paper einzuschreiben und auszulesen.

Für die in den Figuren dargestellten Ausführungsbeispiele zur Erläuterung der Erfindung wurde von einem Positionsgeber ausgegangen, dessen Codeträger kreisscheibenförmig ausgeführt ist und mit einem drehbeweglichen Teil einer maschinellen Einrichtung starr verbunden wird. Das auf der Codescheibe dieses Drehpositionsgebers eingeschriebene magnetische Codemuster ist deshalb vom jeweiligen Drehwinkel des drehbeweglichen Teils der maschinellen Einrichtung abhängig. Selbstverständlich sind die dargestellten Maßnahmen auch auf Linearpositionsgeber übertragbar. Ein entsprechender Linearpositionsgeber enthält dann einen mit einem linear beweglichen Teil einer maschinellen Einrichtung starr verbundenen Codeträger, auf welchem in mindestens einer sich linear erstreckenden Spur einer magnetischen Speicherschicht ein magnetisches Codemuster eingeschrieben ist, dessen Struktur aus Informationen von der jeweiligen linearen Position des linear beweglichen Teils der maschinellen Einrichtung abhängig ist. Bei den in den Figuren 2 bis 9 dargestellten Teilen kann es sich auch um Teile einer Spur auf dem Codeträger eines derartigen Linearpositionsgebers handeln.

**Patentansprüche**

1. Dreh- oder Linearpositionsgeber,
   - mit einem Codeträger (2), der mit einem beweglichen Teil einer Einrichtung starr verbunden ist und mit einer magnetisierbaren Speicherschicht (5, 5') versehen ist, in welche in mindestens einer Spur ($S_i$, S, S1, S2), bestehend aus zwei nebeneinanderliegenden Teilspuren (s, s') mit entgegengesetzter Magnetisierungsrichtung (M, M'; m, m') ein Codemuster aus Informationsabschnitten (A1, A2) mit von der jeweiligen Position des beweglichen Teils abhängigen Informationen eingeschrieben ist,
   wobei in die beiden Teilspulen (s, s') nach dem Prinzip einer longitudinalen, quer zur Spurrichtung verlaufenden oder einer vertikalen Magnetisierung die Informationen als transversal zur Spurrichtung verlaufendes Magnetrisierungsmuster (M*) eingeschrieben sind,
   und
   - mit wenigstens einem jeder mindestens einen Spur ($S_i$, S, S1, S2) zugeordneten magnetoresistiven Sensor (7, 7a, 7b, $7_i$, 7') zum gleichzeitigen Auslesen der beiden Teilspuren (s, s').

2. Geber nach Anspruch 1, **gekennzeichnet** durch einen magnetoresistiven Sensor (7, 7'), dessen Flachseite senkrecht zur Magnetisierungsrichtung in der Speicherschicht (5') ausgerichtet ist.

3. Geber nach Anspruch 1, **gekennzeichnet** durch ein Paar magnetoresistiver Sensoren (7a, 7b) mit untereinander parallelen Flachseiten, die parallel zur Magnetisierungsrichtung in der Speicherschicht (5, 5') ausgerichtet sind.

4. Geber nach einem der Ansprüche 1 bis 3, **dadurch gekennzeichnet,** daß der magnetoresistive Sensor (7) in einer Höhe (h) über der Oberfläche (8) der Speicherschicht (5) angeordnet ist, die kleiner als die halbe transversale Weite (w) der jeweiligen Spur ($S_i$, S' S1, S2) ist.

5. Geber nach einem der Ansprüche 1 bis 4 mit einer Speicherschicht, die vertikal zu magnetisieren ist, **dadurch gekennzeichnet,** daß die Speicherschicht (5) auf einer Unterschicht (11) aus einer weichmagnetischen NiFe-Legierung angeordnet ist.

**Claims**

1. Rotary or linear position encoder,
   - having a code carrier (2) which is rigidly connected to a moving part of a device and is provided with a magnetizable memory layer (5, 5'), into which there is written in at least one track ($S_i$, S, S1, S2), consisting of two adjacent partial tracks (s, s') with opposite magnetization direction (M, M'; m, m') a code pattern of information sections (A1, A2) with information dependent on the respective position of the moving part, whereby there is written into the two partial coils [sic] (s, s'), according to the principle of a magnetization, which is longitudinal, extends at right angles to the track direction or is vertical, information as magnetization pattern (M*) extending transverse to the track direction, and

- having at least one magnetoresistive sensor (7, 7a, 7b, $7_i$, 7') associated with each at least one track ($S_i$, S, S1, S2) for the simultaneous reading-out of the two partial tracks (s, s').

2. Encoder according to claim 1, characterized by a magnetoresistive sensor (7, 7'), the flat side of which is aligned at right angles to the magnetization direction in the memory layer (5').

3. Encoder according to claim 1, characterized by a pair of magnetoresistive sensors (7a, 7b) with flat sides parallel to each other, which are aligned parallel to the magnetization direction in the memory layer (5, 5').

4. Encoder according to one of claims 1 to 3, characterized in that the magnetoresistive sensor (7) is arranged at a height (h) above the surface (8) of the memory layer (5) which is smaller than half the transverse width (w) of the respective track ($S_i$, S, S1, S2).

5. Encoder according to one of claims 1 to 4, having a memory layer which is to be magnetized vertically, characterized in that the memory layer (5) is arranged on a lower layer (11) consisting of a soft-magnetic NiFe alloy.

**Revendications**

1. Capteur de position angulaire ou linéaire, comportant

   - un support de code (2) qui est connecté rigidement à un élément mobile d'un dispositif et est pourvu d'une couche de mémoire (5, 5') magnétisable, dans laquelle est inscrite, dans au moins une voie ($S_i$, S, S1, S2) formée par deux voies partielles (s, s') juxtaposées de sens de magnétisation (M, M'; m, m') opposé, une configuration de code composée de segments d'information (A1, A2), lesquels contiennent des informations dépendantes de la position respective de l'élément mobile, les informations étant inscrites sous forme de configuration de magnétisation (M*) s'étendant transversalement au sens de la voie dans les deux voies partielles (s, s'), selon le principe d'une magnétisation longitudinale s'étendant perpendiculairement au sens de la voie ou d'une magnétisation verticale.
   - au moins un palpeur magnétorésistif (7, 7a, 7b, $7_i$, 7') associé à chaque - au moins une - voie ($S_i$, S, S1, S2) pour la lecture simultanée des deux voies partielles (s, s').

2. Capteur selon la revendication 1, caractérisé par un palpeur magnétorésistif (7, 7') dont le côté plat est orienté verticalement par rapport au sens de magnétisation dans la couche de mémoire (5').

3. Capteur selon la revendication 1, caractérisé par une paire de palpeurs magnétorésistifs (7a, 7b) à côtés plats parallèles, qui sont orientés dans un sens parallèle au sens de magnétisation dans la couche de mémoire (5,5').

4. Capteur selon l'une des revendications 1 à 3, caractérisé en ce que le palpeur magnétorésistif (7) est disposé au-dessus de la surface (8) de la couche de mémoire (5) à une hauteur (h) qui est inférieure à la moitié de la largeur transversale (w) de la voie respective ($S_i$, S, S1, S2).

5. Capteur selon l'une des revendications 1 à 4, comportant une couche de mémoire qui peut être magnétisée verticalement, caractérisé en ce que la couche de mémoire (5) est disposée sur une couche inférieure (11) en alliage magnétique doux de nickel-fer.

FIG 1

FIG 2

FIG 3

FIG 4

FIG 5

FIG 6

FIG 7

FIG 8

FIG 9